# EUROPEAN PATENT SPECIFICATION

(11) **EP 1 671 691 B1**
(45) Date of publication and mention of the grant of the patent: **24.12.2008**
(21) Application number: 05109915.8
(22) Date of filing: 24.10.2005
(51) Int. Cl.: B01D 27/10

(54) **One-piece flow control valve for fluid filter assembly**
Einstückiges Stromregelventil für eine Flüssigkeitsfilteranordnung
Soupape monobloc de réglage du débit pour un dispositif de filtration de liquide

(30) Priority: 30.11.2004 US 999061
(43) Date of publication of application: 21.06.2006
(73) Proprietor: Wix Filtration Corp LLC, Gastonia NC 28054 (US)
(72) Inventor: McKenzie, Darrell T., Gastonia, NC 28056 (US)
(74) Representative: Franzolin, Luigi

(56) References cited:
- US-A- 3 369 666
- US-A- 3 802 564
- US-A- 6 136 183
- US-B1- 6 936 162

## Description

### 1. Field of the Invention

The present invention relates to fluid filters in general, and more particularly to a fluid filter including a flow control valve.

### 2. Description of the Prior Art

Fluid filters are widely used to filter liquids and gases to remove contaminants therefrom. For example, spin-on type filters are commonly used to filter engine oil in an automotive vehicle. Such filters are commonly provided with a pressure relief valve that permits the fluid to by-pass a filter element if it becomes clogged with the contaminants. When open, the pressure relief valve permits direct fluid communication between a filter inlet and outlet when the filter becomes clogged, so that the vehicle engine will not be starved for lubrication.

US-A-6 136 183 discloses a pressure relieve valve for a filter device including deformable portions that normally close an oil bypass passage.

The filters are also often provided with an anti-drainback valve that traps fluid in the filter and prevents it leaking out of the filter, e.g. when the vehicle engine is turned off.

US-A-3 369 666 discloses a filter having a duckbill type anti-drainback valve.

Some conventional fluid filters include both the pressure relief valve and anti-drainback valve (see e.g. US-A-3 369 666). However, known arrangements including pressure relief and anti-drainback valves are made of large number of separate parts that makes them expensive in manufacturing and laborious and difficult to assemble.

Therefore, the fluid filters, including but not limited to those discussed above, are susceptible to improvements that may enhance their performance and cost. With this in mind, a need exists to develop improved pressure relief and anti-drainback valves for fluid filters that advance the art.

### SUMMARY OF THE INVENTION

The present invention provides a novel one-piece fluid flow valve for a fluid filter assembly and the like as claimed in claim 1.

The fluid filter assembly valve in accordance with the preferred embodiment of the present invention comprises a casing, an end plate closing off the casing, a filter element disposed within the casing, and a one-piece flow control valve combining functions of a pressure relieve valve and an anti-drainback valve. The end plate has a central outlet opening and at least one inlet opening radially spaced from the central outlet opening. The annular filter element divides the casing into an inlet chamber communicating with the at least one inlet opening and an outlet chamber (44) communicating with the central outlet. The flow control valve has a single-piece valve body made of a resilient material and defining a central opening normally closed by a first resiliently deformable portion of the valve body. The valve body further includes a second resiliently deformable portion. The valve body further defines at least one bypass passage between the inlet chamber and the outlet chamber (44) normally closed by the flap portion. The second deformable portion deflects to uncover the at least one bypass passage when the filter element is clogged so that fluid can flow from the inlet chamber to the outlet chamber (44) through the at least one bypass passage and through the central opening in the single-piece valve body to bypass the clogged filter.

Therefore, the one-piece self-venting drain valve in accordance with the present invention provides a one-piece flow control valve combining functions of a pressure relieve valve and an anti-drainback valve. The one-piece flow control valve of the present invention is simple, inexpensive to manufacture and easy to install because of the simplicity of its design that is a significant improvement over prior art valves.

According to a preferred embodiment of the present invention, the one-piece self-venting drain valve also serves for supporting the filter element within the filter casing.

Upon further study of the specification and appended claims, further features and advantages of this invention will become apparent to those skilled in the art.

### BRIEF DESCRIPTION OF THE DRAWINGS

Other objects and advantages of the invention will become apparent from a study of the following specification when viewed in light of the accompanying drawings, wherein:
Fig. 1 is a cross-sectional view of a filter assembly of the present invention;
Fig. 2 is a cross-sectional view of a filter casing and a filter element of the filter assembly of the present invention;
Fig. 3 is a perspective view of a one-piece flow control valve according to the preferred embodiment of the present invention;
Fig. 4 is a cross-sectional view of the one-piece flow control valve according to the preferred embodiment of the present invention;
Fig. 5 is a cross-sectional view of filter assembly of the present invention showing flow of fluid through the filter assembly during the normal operation;
Fig. 6 is a cross-sectional view of filter assembly of the present invention showing flow of fluid through the filter assembly when the filter element is clogged.

### DETAILED DESCRIPTION OF PREFERRED EMBODIMENTS

The preferred embodiment of the present invention will now be described with the reference to accompanying drawings. In the present description of the preferred embodiment, certain terminology will be used for descriptive purposes only and is not intended to be limiting. The terms "upper", "lower", "top", "bottom", "right" and "left" designate directions in the drawings to which reference is made. The words "inward" and "outward" refer, respectively, to directions toward and away from the geometric center of the device and designated parts thereof. However, it is to be understood that the invention may assume various alternative orientations, except where expressly specified to the contrary. The terminology includes the words specifically mentioned above, derivatives thereof and words of similar import.

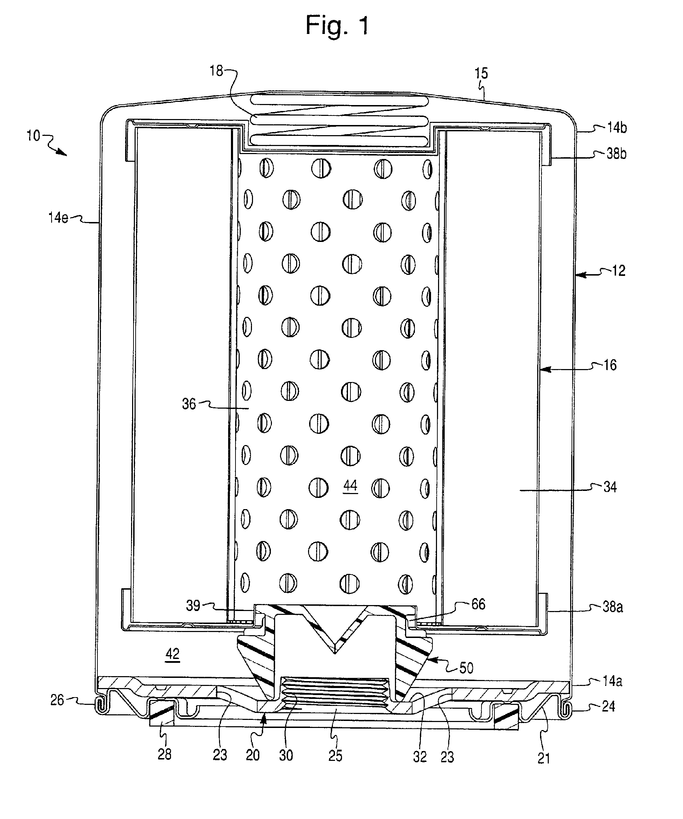

Fig. 1 depicts a fluid filter assembly 10 of a spin-on type such as used to filter engine-lubricating oil in a motor vehicle, to which the present invention can be applied. However, it is to be understood that while the present invention is described in relation to the spin-on type engine oil filter assembly, the present invention is equally suitable for use in any appropriate fluid filter assembly adapted to filter various fluids.

Referring now to Figs. 1, 2 and 3, the filter assembly 10, to which the present invention can be applied, includes a cup-shaped casing (or canister) 12, a substantially cylindrical filter element 16 encased in the casing 12, and an annular end plate 20 closing off a lower open end of the casing 12. The filter casing 12 of the filter assembly 10 has a first end 14a and a second end 14b, and is formed by a substantially cylindrical side wall 14c open at the first end 14a of the filter housing 12 and closed at the second end 14b thereof by an end wall 15 formed unitary with the side wall 14c at the second end 14b of the filter housing 12.

The filter element 16 is biased by a coil spring 18 to seat against the end plate 20. The end plate 20 is retained within the lower end 14a of the casing 12 by a retainer plate 21 disposed against the bottom of the end plate 20. The annular retainer plate 21 is provided with an outwardly and upwardly turned lip 24 rolled over a complementary lip 26 disposed on the lower end of the casing 12 so as to form a rolled seam. An annular, resilient gasket 28 is disposed within a complementary annular recess in the retainer plate 21 so as to form a liquid tight seal against a cylinder block of an engine when the filter assembly 10 is secured thereto.

A central portion of the end plate 20 is provided with an internally threaded sleeve 30 defining a central outlet opening (or port) 25 therein. The central portion of the end plate 20 is also provided with a substantially horizontal, flat, annular shelf 32 around the threaded sleeve 30 and at least one fluid inlet opening (or port) 23. Preferably, the end plate 20 has a plurality of circumferentially spaced fluid inlet openings 23. As illustrated in Fig. 1, the inlet openings 23 are formed radially outwardly of the threaded sleeve 30 and the annular shelf 32, and radially inwardly of the gasket 28.

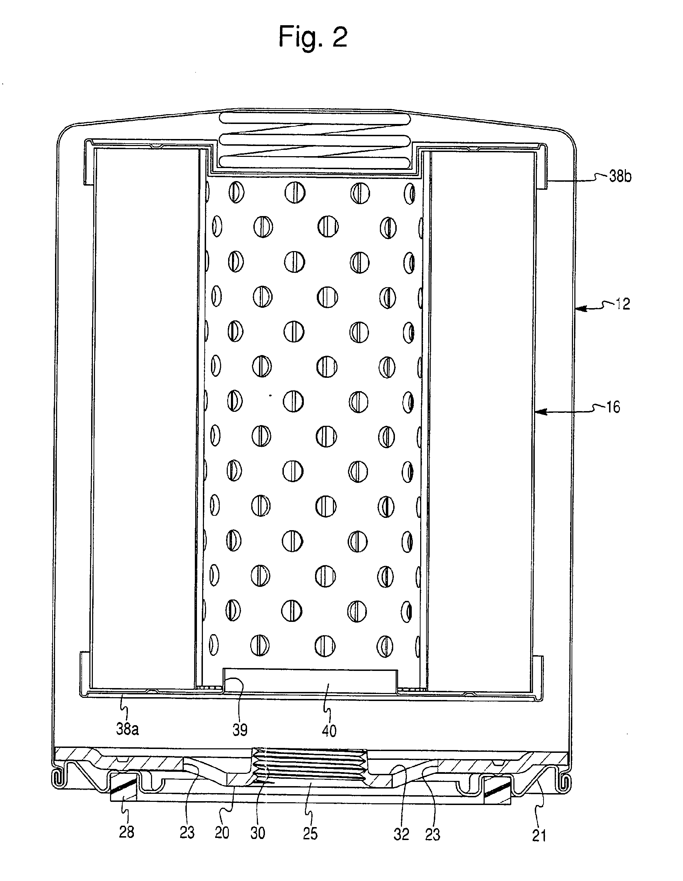

The filter element 16 includes a filter media 34 disposed around a perforated center tube (or hollow core) 36, and end caps 38a and 38b sealing off opposite ends of the filter media 34 at. Preferably, the filter media 34 is in the form of a conventional pleated paper filter material disposed around the perforated center tube 36. It will be appreciated that any other appropriate filter material will be within the scope of the present invention. As further illustrated in detail in Fig. 2, the lower end cap 38a has a substantially annular inner flange 39 defining an aperture 40 in the lower end cap 38a. The upper end cap 38b closes off an upper end of the hollow core 36 and is formed with a recess receiving the spring 18 so as to maintain the filter element 16 in a seated position in the filter casing 12.

The annular filter element 16 divides a cavity within the filter housing 12 into an inlet chamber 42 (a space within the filter housing 12 and outside the filter element 16) communicating with the inlet openings 23 and an outlet chamber 44 (a space within the hollow core 36 of the filter element 16) communicating with the central outlet opening 25. It will be appreciated that the inlet chamber 42 defines a dirty side of the filter assembly 10, while the outlet chamber 44 defines a clean side thereof.

The filter assembly 10 of the present invention further comprises a one-piece flow control valve 50 combining functions of a pressure relieve (or bypass) valve and an anti-drainback valve. The flow control valve 50 also serves for supporting the filter element 16 within the casing 12 between the end plate 20 and the spring 18.

The flow control valve 50 is made of a resilient (or elastic) material, such as rubber or rubber-like material, as a single-piece member and, in assembled condition, is mounted within the lower end cap 38a of the filter element 16 as best illustrated in Figs. 1, 5 and 6. The one-piece flow control valve 50 is sandwiched between the filter element 16 and the end plate 20 and biased by the coil spring 18 through the filter element 16 to seat against the end plate 20.

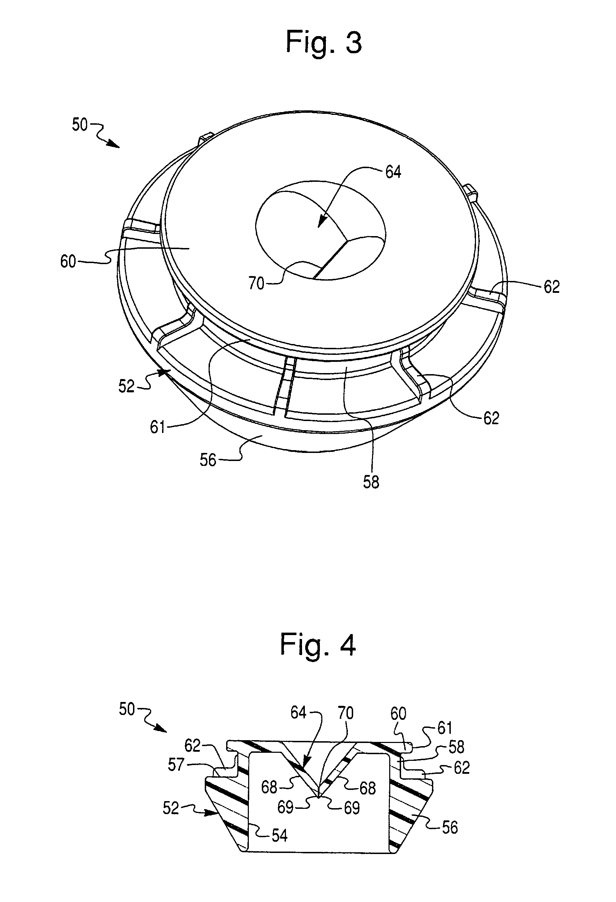

As illustrated in detail in Figs. 3 and 4, the one-piece flow control valve 50 comprises a substantially annular, single-piece valve body 52 defining a central opening 54 therethrough and including a support portion 56, a collar portion 58 extending from the support portion 56, an annular flap portion 60 radially outwardly extending from the collar portion 58 and serving as a bypass valve, a plurality of substantially L-shaped ribs 62 outwardly extending from the support portion 56, and an anti-drainback valve generally designated 64. Alternatively, the ribs 62 may be provided on an outer peripheral surface of the lower end cap 38a. Preferably, the single-piece valve body 52 is made of a substantially homogenous resilient material.

The distal end of the support portion 56 is seated on the shelf 32 of the end plate 20 so as to form a fluid-tight seal with the end plate 20 to prevent fluid communication between the inlet chamber 42 and the outlet chamber 44.

The lower end cap 38a of the filter element 16 is supported by the ribs 62 outwardly extending from a support surface 57 of the support portion 56 so as to form at least one, but preferably a plurality of bypass passages 66 between the lower end cap 38a of the filter element 16 and the ribs 62 of the body 52 of the flow control valve 50 and the flange 39 of the cap 38a and the collar portion 58.

Normally, an outer peripheral surface 61 of the flap portion 60 sealing engages the inner flange 39 of the lower end cap 38a to prevent fluid communication between the inlet chamber 42 and the outlet chamber 44 through the bypass passages 66.

The anti-drainback valve 64 has a general configuration of a duckbill, or slit-diaphragm valve. As illustrated in detail in Figs. 3 and 4, the anti-drainback valve 64 is provided with two substantially planar or flat sides 68 having distal lip portions 69 that converge to a slit 70 through which the fluid can flow only in the direction from the outlet chamber 44 to the central outlet port 25. Normally, the distal lip portions 69 of the flat sides 68 sealingly engage each other.

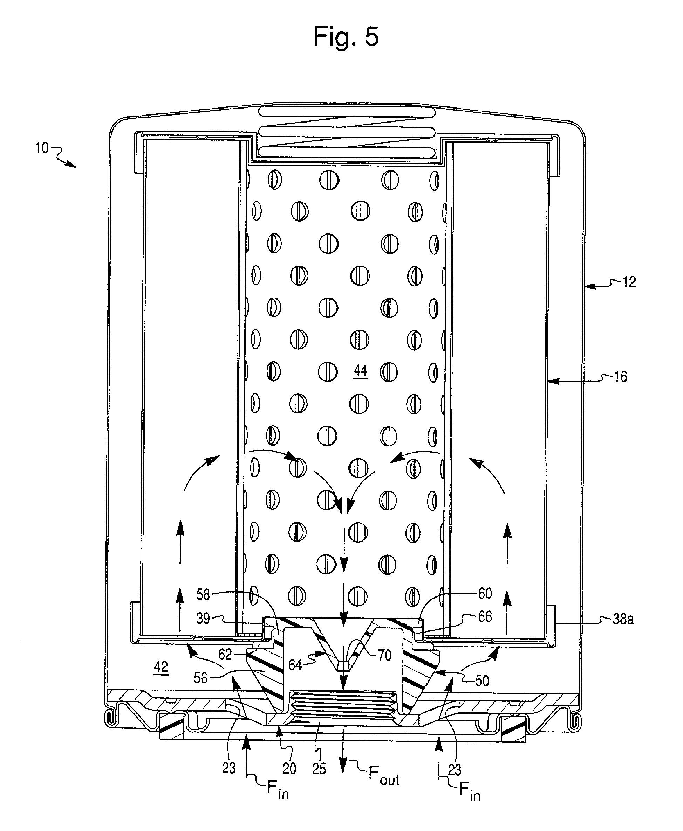

During normal operation, illustrated in Fig. 5, the fluid to be filtered such as lubricating oil, represented by arrows F_{IN}, flows through the inlet ports 23 into the inlet chamber 42 within the filter casing 12. From the inlet chamber 42 the fluid flows in an outside-in direction through the filter media 34 of the filter element 16 into the outlet chamber 44. The filter element 16 removes any contaminants carried in the fluid stream. Then, the filter fluid, represented by arrows F_{OUT}, exits the outlet chamber 44 of the fluid filter assembly 10 through the anti-drainback valve 64 of the flow control valve 50 and through the central outlet port 25 in the endplate 20. While exiting the fluid filter assembly 10, the fluid pressure forces the flat sides 68 of the anti-drainback valve 64 to separate from each other, thus opening the slit 70 and permitting the fluid to pass through the anti-drainback valve 64 into the central opening 54 in the flow control valve 50 and out of the filter assembly 10 through the central outlet port 25. The duckbill configuration of the flexible anti-drainback valve 64 permits fluid to flow only in one direction theretrough since the resilient force acting on the flat sides 68 of the anti-drainback valve 64 closes the slit 70 when there is no forced fluid flow through the anti-drainback valve 64 in the direction from the outlet chamber 44 to the central outlet port 25. At such instance, the lip portions 69 of the flat sides 68 return to their original position to close the slit 70 and form a tight seal preventing the fluid flow through the anti-drainback valve 64. It will be appreciated that the configuration of the duckbill valve does not require a biasing spring or any other means to return the flat sides 68 of the anti-drainback valve 64 to a closed position, but the inherent characteristics of the valve 64 and its configuration causes the anti-drainback valve 64 to be normally maintained in the closed position when there is no fluid flow through the filter assembly 10.

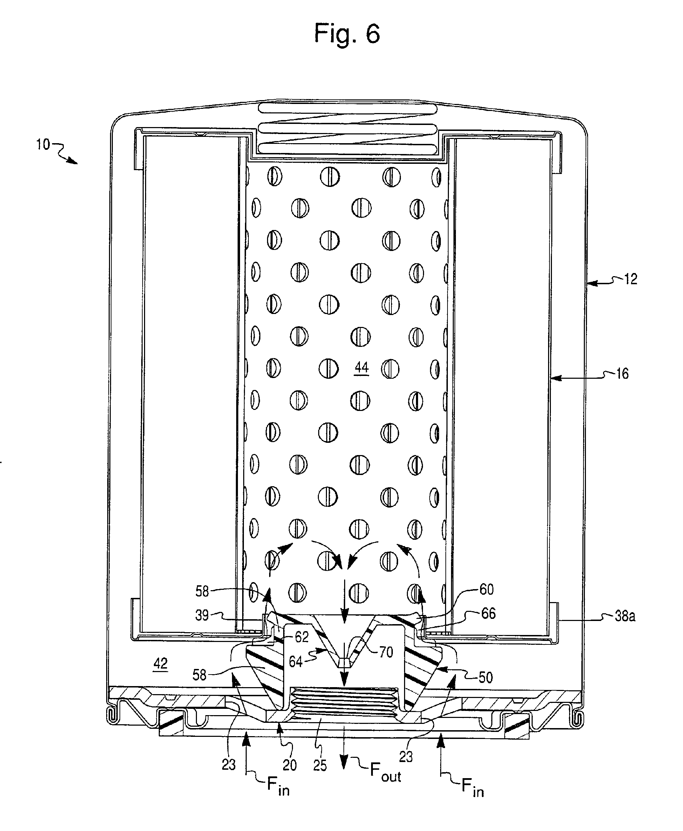

When the filter element 16 becomes clogged so that the fluid pressure entering the fluid inlet ports 23 exceeds that within the outlet chamber 44 because of the restricted flow through the filter media 34, the fluid pressure differential between the inlet ports 23 and the outlet port 25 causes the flap portion 60 of the flow control valve 50 to deflect into the outlet chamber 44, thus opening the bypass passages 66 to permit direct fluid communication between the inlet chamber 42 and the outlet chamber 44. The opening of the bypass passages 66 allows the fluid entering the inlet ports 23 to pass through the fluid bypass passages 66 into the outlet chamber 44 bypassing the filter element 16 and out of the filter assembly 10 through the central outlet port 25, as shown in Fig. 6.

When the filter assembly 10 is not operating, the anti-drainback valve 64 of the flow control valve 50 prevents fluid from leaking from the outlet chamber 44 through the central outlet port 25. In other words, the anti-drainback valve 64 is defined as the "clean side" anti-drainback valve.

Therefore, the one-piece self-venting drain valve in accordance with the present invention provides a one-piece flow control valve made of a substantially homogenous resilient material and combining functions of a pressure relieve valve and an anti-drainback valve, also serves for supporting the filter element within the filter casing. The one-piece flow control valve of the present invention is simple, inexpensive to manufacture and easy to install because of the simplicity of its design that is a significant improvement over prior art valves.

## Claims

1. A fluid filter assembly (10) for filtering a fluid, said filter assembly (10) comprising:
a filter casing (12) and an end plate (20) closing off said filter casing (12), said end plate (20) having a central outlet opening (25) therethrough and at least one inlet opening (23) radially spaced from said central outlet opening (25);
a filter element (16) disposed within said filter casing (12), said filter element (16) dividing said casing (12) into an inlet chamber (42) communicating with said at least one inlet opening (23) and an outlet chamber (44) communicating with said central outlet opening (25);
at least one bypass passage (66) between said inlet chamber (42) and said outlet chamber (44); and
a one-piece flow control valve (50) having a single-piece valve body (52) made of a substantially resilient material and including a support portion (56) having a central opening (54) therethrough, a first resiliently deformable portion (68, 69) normally closing said central opening (54) and defining an anti-drainback valve (64) therewith, and a second resiliently deformable portion (60) normally closing said at least one bypass passage (66) to prevent fluid communication between said inlet chamber (42) and said outlet chamber (44) through said at least one bypass passage (66) and open said at least one bypass passage (66) when said filter element (16) is clogged so that fluid can flow from said inlet chamber (42) to said outlet chamber (44).

2. The fluid filter assembly (10) as defined in claim 1, wherein said second resiliently deformable portion is a resilient flap portion (60) extending radially outwardly from said valve body (52) so that said flap portion (60) normally covers said at least one bypass passage (66) and deflects to uncover said at least one bypass passage (66) when said filter element (16) is clogged so that fluid can flow from said inlet chamber (42) to said outlet chamber (44) through said at least one bypass passage (66) and through said central opening (54) in said single-piece valve body (52) to bypass said clogged filter element (16).

3. The fluid filter assembly (10) as defined in claim 2, wherein said filter element (16) has a hollow core (36) and is supported by opposite end caps (38a, 38b).

4. The fluid filter assembly (10) as defined in claim 3, wherein one of said end caps (38a, 38b) has a central opening (54) therethrough, and wherein said resilient flap portion (60) of said one-piece flow control valve (50) normally sealingly engages said central opening (54) in one of said end caps (38a, 38b) of said filter element (16).

5. The fluid filter assembly (10) as defined in any of the preceding claims, wherein said single-piece valve body (52) of said flow control valve (50) is disposed between said end plate (20) and said filter element (16).

6. The fluid filter assembly (10) as defined in any of the preceding claims, wherein said filter casing (12) is substantially cylindrical and said filter element (16) is substantially annular in shape.

7. The fluid filter assembly (10) as defined in any of the preceding claims, wherein said single-piece valve body (52) of said flow control valve (50) is further provided to support said filter element (16) within said filter casing (12) adjacent to said end plate (20).

8. The fluid filter assembly (10) as defined in any of the preceding claims, wherein said first deformable portion is in the form of a slit-diaphragm valve comprising two planar converging sides (68) provided with a slit at their point of convergence.

9. The fluid filter assembly (10) as defined in any of the preceding claims, wherein said filter element (16) is biased toward said end plate (20) by a spring element (18) disposed between a closed end of said filter casing (12) and said filter element (16) to seat against said end plate (20).

10. The fluid filter assembly (10) as defined in any of the preceding claims, wherein said support portion (56) of said flow control valve (50) is sandwiched between said filter element (16) and said end plate (20).

11. The fluid filter assembly (10) as defined in claim 10, wherein said single-piece valve body (52) of said flow control valve (50) further includes a plurality of ribs (62) outwardly extending from said support portion (56) so as to form at least one bypass passage (66) between said filter element (16) and said single-piece valve body (52), said bypass passage (66) providing direct fluid communication between said inlet and outlet chamber (42, 44) bypassing said filter element (16).

12. The fluid filter assembly (10) as defined in claim 11, wherein said second resiliently deformable portion (60) of said single-piece valve body (52) normally closes said at least one bypass passage (66) to prevent fluid communication between said inlet chamber (42) and said outlet chamber (44) through said bypass passage (66).

13. The fluid filter assembly (10) as defined in claim 3, wherein one of said end caps (38a, 38b) includes an inner flange (39) forming a central opening (54) therethrough, and wherein said resilient flap portion (60) of said one-piece flow control valve (50) normally sealingly engages said inner flange (39) to close said bypass passage (66).

14. The fluid filter assembly (10) as defined in claim 13, wherein said single-piece valve body (52) further includes a collar portion (58) axially extending from said resilient flap portion (60), and wherein said collar portion (58) is disposed within said central opening (54) through one of said end caps (38a, 38b); said at least one bypass passage (66) being provided in a space between said collar portion (59) and said inner flange (39) of one of said end caps (38a, 38b).

15. A one-piece flow control valve (50) for a fluid filter assembly (10) including a filter casing (12), an end plate (20) closing off said filter casing (12) and a filter element (16) disposed within said filter casing (12), said end plate (20) having a central outlet opening (25) therethrough and at least one inlet opening (23) radially spaced from said central outlet opening, said filter element (16) dividing said casing (12) into an inlet chamber (42) communicating with said at least one inlet opening (23) and an outlet chamber (44) communicating with said central outlet, said fluid filter assembly (10) further including at least one bypass passage (66) fluidly connecting said inlet chamber (42) to said outlet chamber (44), said flow control valve (50) comprising a single-piece valve body (52) made of a substantially resilient material and including a support portion (56) having a central opening (54) therethrough, a first resiliently deformable portion (68, 69) normally closing said central opening (54) and defining an anti-drainback valve (64) therewith, and a second resiliently deformable portion (60) designed to normally close said at least one bypass passage (66) to prevent fluid communication between said inlet chamber (42) and said outlet chamber (44) through said at least one bypass passage (66) and open said at least one bypass passage (66) when said filter element (16) is clogged so that fluid can flow from said inlet chamber (42) to said outlet chamber (44).

16. The one-piece flow control valve (50) as defined in claim 15, wherein said second resiliently deformable portion (60) includes a resilient flap portion (60) extending radially outwardly from said valve body (52).

17. The one-piece flow control valve (50) as defined in claim 15 or 16, wherein said single-piece valve body (52) includes a plurality of ribs (62) outwardly extending from said support portion (56) and defining said at least one bypass passage (66).

18. The one-piece flow control valve (50) as defined in claim 17, wherein said flap portion (60) of said single-piece valve body (52) normally closes said at least one bypass passage (66).

19. The one-piece flow control valve (50) of claim 18, wherein said single-piece valve body (52) further includes a collar portion (58) axially extending from said resilient flap portion (60).

## Patentansprüche

1. Eine Flüssigkeitsfilteranordnung (10) für die Filterung einer Flüssigkeit, wobei diese Filteranordnung (10) enthält:
ein Filtergehäuse (12) und eine Endplatte (20), die dieses Filtergehäuse (12) verschließt, welche Endplatte (20) eine durch sie hindurchgehende zentrale Auslassöffnung (25) sowie zumindest eine Einlassöffnung (23) aufweist, die radial von der zentralen Auslassöffnung (25) beabstandet ist;
ein Filterelement (16), das innerhalb des Filtergehäuses (12) angeordnet ist, wobei dieses Filterelement (16) dieses Gehäuse (12) in eine Einlasskammer (42) und eine damit kommunizierende zumindest eine Einlassöffnung (23) aufteilt, sowie in eine Auslaßkammer (44), die mit dieser zentralen Auslassöffnung (25) kommuniziert;
zumindest einen Umgehungsdurchlass (66), der sich zwischen der Einlasskammer (42) und dieser Auslasskammer (44) befindet;
und
ein einstückiges Strömungsteuerungsventil (20) mit einem einstückigen Ventilkörper (52), der aus einem im wesentlichen elastischen Material hergestellt ist und einen Stützabschnitt (56) aufweist mit einer dort durchgeführten zentralen Öffnung (54), ein erstes elastisch verformbares Teil (68,69), das normalerweise die zentrale Öffnung (54) schließt und ein Antiausfluss-Ventil (64) damit festlegt, und ein zweites elastisches verformbares Teil (60) aufweist, das normalerweise diesen zumindest einen umgehungsdurchlass (66) schließt, um eine Flüssigkeitskommunikation zwischen dieser Einlasskammer (42) und dieser Auslaßkammer (44) über diesen zumindest einen Umgehungsdurchlass (66) zu verhindern, und um diesen zumindest einen umgehungdurchlass (66) zu öffnen, wenn dieses Filterelement (16) verstopft ist, so dass Flüssigkeit von dieser Einlasskammer (42) zu dieser Auslaßkammer (44) fließen kann.

2. Die Flüssigkeitsfilteranordnung (10) nach Anspruch 1, worin dieses zweite elastisch verformbare Teil ein elastisches Klappenteil (60) ist, das stich radial auswärts von diesem Ventilkörper (52) derart erstreckt, so dass das Klappenteil (60) normalerweise diesen zumindest einen Umgehungsdurchlass (66) verschließt und sich verwölbt, um diesen zumindest einen Umgehungdurchlass (66) freizugeben, wenn dieses Filterelement (16) verstopft ist, so dass Flüssigkeit von dieser Einlasskammer (42) zu dieser Auslaßkammer (44) durch diesen zumindest einen Umgehungsdurchlass (66) und durch diese zentrale Öffnung (54) in dem einstückiger Ventilkörper (52) fließen kann, um das verstopfte Filterelement (16) zu umgeben.

3. Die Flüssigkeitsfilteranordnung (10) nach Anspruch 2, worin dieses Filterelement (16) einen hohlen Kern (36) aufweist und von einander entgegen gesetzten Endkappen (38a,38b) abgestützt ist.

4. Die Flüssigkeitsfilteranordnung (10) nach Anspruch 3, worin eine dieser Endkappen (38a,38b) eine zentrale Öffnung (54) durch sich aufweist und worin dieses elastische Klappenteil (60) auf diesem einstückigen Strömungssteuerventil (50) normalerweise diese zentrale Öffnung (54) abdichtend eingreift, die in einer der Endkappen (38a,38b) von diesem Filterelement (16) vorhanden ist.

5. Die Flüssigkeitsfilteranordnung (10) nach einem der vorstehenden Ansprüche, worin dieser einstückige Ventilkörper (52) von diesem Flüssigkeitssteuerventil (50) zwischen dieser Endplatte (20) und diesem Filterelement (16) angeordnet ist.

6. Die Flüssigkeitsfilteranordnung (10) nach einem der vorstehenden Ansprüche, worin dieses Filtergehäuse (12) im wesentlichen zylindrisch ausgebildet ist und dieses Filterelement (16) im wesentlichen ringförmig ausgebildet ist.

7. Die Flüssigkeitsfilteranordnung (10) nach einem der vorstehenden Ansprüche, worin dieser einstückige Ventilkörper (52) des Flüssigkeitssteuerventils (50) des weiteren ausgebildet ist, um dieses Filterelement (16) innerhalb dieses Filtergehäuses (12) angrenzend an dieser Endplatte (20) zu tragen.

8. Die Flüssigkeitsfilteranordnung (10) nach einem der vorstehenden Ansprüche, worin dieses erste deformierbare Teil die Form eines mit einer geschlitzten Membran versehenen Ventils hat, mit zwei planar konvergierenden Seiten (68), die mit einem Schlitz in dem höchsten Punkt ihrer Konvergenz versehen sind.

9. Die Flüssigkeitsfilteranordnung (10) nach einem der vorstehenden Ansprüche, worin dieses Filterelement (16) in Richtung auf diese Endplatte (20) mittels eines Federelementes (18) vorgespannt ist, welches Federelement (18) zwischen einem geschlossenen Ende von diesem Filtergehäuse (12) und diesem Filterelement (16) angeordnet ist, um auf der Endplatte (20) zu sitzen.

10. Die Flüssigkeitsfilteranordnung (10) nach einem der vorstehenden Ansprüche, worin dieser Stützabschnitt (56) von diesem Strömungssteuerventil (50) zwischen diesem Filterelement (16) und dieser Endplatte (26) zwischengefügt ist.

11. Die Flüssigkeitsfilteranordnung (10) nach Anspruch 10, worin dieser einstückige Ventilkörper (52) von diesem Strömungssteuerventil (50) des weiteren enthält eine Vielzahl von Rippen (62), die sich nach außen von diesem Stützabschnitt (56) her erstrecken, um zumindest einen Umgehungsdurchlass (66) zwischen diesem Filterelement (16) und diesem einstückigen Ventil (52) zu bilden, wobei dieser Umgehungsdurchlass (66) eine direkte Flüssigkeitskommunikation zwischen dieser Einlass- und Auslasskammer (42,44) zur Verfügung stellt, um eine Umgehung für dieses Filterelement (16) bereit zu stellen.

12. Die Flüssigkeitsfilteranordnung (10) nach Anspruch 11, worin dieses zweite elastische deformierbare Teil (60) des einstückigen Ventilkörpers (52) normalerweise dieses zumindest einen Umgehungsdurchlass (66) verschließt, um eine Kommunikation zwischen dieser Einlasskammer (42) und dieser Auslasskammer (44) durch diesen Umgehungsdurchlass (66) zu verhindern.

13. Die Flüssigkeitsfilteranordnung (10) nach Anspruch 3, worin eine dieser Endkappen (38a,38b) einen inneren Flansch (39) enthält, der eine zentrale Öffnung (54) **dadurch** gehend ausbildet, und worin dieses elastische Klappenteil (60) von diesem einstückigen Durchflusssteuerventil (50) normalerweise abdichtend diesen inneren Flansch (39) ergreift, um diesen Umgehungsdurchlass (66) zu schließen.

14. Die Flüssigkeitsfilteranordnung (10) nach Anspruch 13, worin dieser einstückige Ventilkörper (52) des weiteren enthält einen Bundabschnitt (58), der sich in axialer Richtung von diesem elastischen Klappenteil (60) aus erstreckt, und worin dieser Bundabschnitt (58) innerhalb dieser zentralen Öffnung (54) durch eine dieser Endkappen (38a,38b) angeordnet ist; wobei dieser zumindest eine Umgehungsdurchlass (66) in einem Raum zwischen diesem Bundabschnitt (58) und dem inneren Flansch (39) von einer dieser Endkappen (38a, 38b) angeordnet ist.

15. Ein einstückiges Strömungssteuerventil (50) für eine Flüssigkeitsfilteranordnung (10) enthaltend ein Filtergehäuse (12), wobei eine Endplatte (20) dieses Filtergehäuse (12) verschließt und ein Filterelement (16) innerhalb dieses Filtergehäuses (12) angeordnet ist, wobei diese Endplatte (20) durch sich hindurch eine zentrale Auslaßöffnung (25) aufweist und zumindest eine Einlassöffnung (23), die radial von dieser zentralen Auslassöffnung beabstandet ist, wobei dieses Filterelement (16) dieses Gehäuse (12) in eine Einlasskammer (42), die mit dieser zumindest einen Einlassöffnung (23) kommuniziert, und in eine Auslaßkammer (44) aufgeteilt, die mit diesem zentralen Auslaß kommuniziert, wobei die Flüssigkeitsfilteranordnung (10) des weiteren enthält zumindest einen Umgehungsdurchlass (66), der diese Einlasskammer (42) mit dieser Auslasskammer (44) flüssigkeitsmäßig verbindet, wobei dieses Strömungssteuerungsventil (50) einen einstückigen Ventilkörper (52) aufweist, der im wesentlichen aus einem elastischen Material hergestellt ist und einen Stützabschnitt (56) mit einer **dadurch** geführten zentralen Öffnung (54) enthält, wobei ein erstes elastisch verformbares Teil (68,69) normalerweise diese zentrale Öffnung (54) verschließt und somit ein Antiauslauf-Ventil (64) damit bildet, und wobei ein zweites elastisch verformbares Teil (60) dazu ausgelegt ist, um normalerweise diesen zumindest einen Umgehungsdurchlass (66) zu schließen, um zu verhindern, dass eine Flüssigkeitskommunikation zwischen dieser Einlasskammer (42) und dieser Auslaßkammer (44) durch diesen zumindest einen Umgehungsdurchlass (66) auftritt, und um diesen zumindest einen Umgehungsdurchlass (66) zu öffnen, wenn dieses Filterelement (16) verstopft ist, so dass Flüssigkeit von dieser Einlasskammer (52) zu dieser Auslasskammer (44) fließen kann.

16. Das einstückige Strömungssteuerventil (50) nach Anspruch 15, worin dieses zweite elastisch verformbare Teil (60) ein elastisches Klappenteil (60) aufweist, das sich radial auswärts von diesem Ventilkörper (52) erstreckt.

17. Das einstückige Strömungssteuerventil (50) nach Anspruch 15 oder 16, worin dieser einstückige Ventilkörper (52) eine Vielzahl von Rippen (52) enthält, die sich auswärts von diesem Stützabschnitt (56) erstrecken und somit diesen zumindest einen Umgehungsdurchlass (66) definieren.

18. Das einstückige Strömungssteuerventil (50) nach Anspruch 17, worin dieses Klappenteil (60) von dem einstückigen Ventilkörper (52) normalerweise diesen zumindest einen Umgehungsdurchlass (66) verschließt.

19. Das einstückige Strömungssteuerventil (50) nach Anspruch 18, worin dieser einstückige Ventilkörper (52) des weiteren enthält einen Bundabschnitt (58), der sich axial von diesem elastischen Klappenteil (60) aus erstreckt.

## Revendications

1. Dispositif de filtration de fluide (10) pour filtrer un fluide, ledit dispositif de filtration (10) comprenant :
un boîtier de filtration (12) et une plaque d'extrémité (20) fermant ledit boîtier de filtration (12), ladite plaque d'extrémité (20) comportant une ouverture de sortie centrale (25) à travers celle-ci et au moins une ouverture d'entrée (23) espacée radialement de ladite ouverture de sortie centrale (25) ;
un élément de filtre (16) disposé à l'intérieur dudit boîtier de filtration (12), ledit élément de filtre (16) divisant ledit boîtier (12) en une chambre d'entrée (42) en communication avec ladite au moins une ouverture d'entrée (23) et une chambre de sortie (44) en communication avec ladite ouverture de sortie centrale (25) ;
au moins un passage de dérivation (66) entre ladite chambre d'entrée (42) et ladite chambre de sortie (44) ; et
une soupape monobloc de réglage (50) comportant un corps de soupape monobloc (52) constitué d'un matériau sensiblement résilient et comprenant une partie de support (56) comportant une ouverture centrale (54) à travers celle-ci, une première partie déformable de façon résiliente (68, 69) fermant normalement ladite ouverture centrale (54) et définissant un clapet antiretour (64) avec celle-ci, et une seconde partie déformable de façon résiliente (60) fermant normalement ledit au moins un passage de dérivation (66) pour empêcher la communication fluidique entre ladite chambre d'entrée (42) et ladite chambre de sortie (44) à travers ledit au moins un passage de dérivation (66) et ouvrir ledit au moins un passage de dérivation (66) quand ledit élément de filtre (16) est obstrué, de telle sorte que le fluide puisse s'écouler de ladite chambre d'entrée (42) à ladite chambre de sortie (44).

2. Dispositif de filtration de fluide (10) selon la revendication 1, dans lequel ladite seconde partie déformable de façon résiliente est une partie de rabat résiliente (60) s'étendant radialement vers l'extérieur depuis ledit corps de soupape (52) de telle sorte que ladite partie de rabat (60) couvre normalement ledit au moins un passage de dérivation (66) et se déforme pour découvrir ledit au moins un passage de dérivation (66) quand ledit élément de filtre (16) est obstrué, de telle sorte que le fluide puisse s'écouler de ladite chambre d'entrée (42) à ladite chambre de sortie (44) à travers ledit au moins un passage de dérivation (66) et à travers ladite ouverture centrale (54) dans ledit corps de soupape monobloc (52) pour contourner ledit élément de filtre (16) obstrué.

3. Dispositif de filtration de fluide (10) selon la revendication 2, dans lequel ledit élément de filtre (16) comporte un centre creux (36) et est supporté par des bouchons d'extrémité opposés (38a, 38b).

4. Dispositif de filtration de fluide (10) selon la revendication 3, dans lequel l'un desdits bouchons d'extrémité (38a, 38b) comporte une ouverture centrale (54) à travers celui-ci, et dans lequel ladite partie de rabat résiliente (60) de ladite soupape monobloc de réglage (50) coopère normalement de façon étanche avec ladite ouverture centrale (54) dans l'un desdits bouchons d'extrémité (38a, 38b) dudit élément de filtre (16).

5. Dispositif de filtration de fluide (10) selon l'une quelconque des revendications précédentes, dans lequel ledit corps de soupape monobloc (52) de ladite soupape de réglage (50) est disposé entre ladite plaque d'extrémité (20) et ledit élément de filtre (16).

6. Dispositif de filtration de fluide (10) selon l'une quelconque des revendications précédentes, dans lequel ledit boîtier de filtration (12) est de forme sensiblement cylindrique et ledit élément de filtre (16) est de forme sensiblement annulaire.

7. Dispositif de filtration de fluide (10) selon l'une quelconque des revendications précédentes, dans lequel ledit corps de soupape monobloc (52) de ladite soupape de réglage (50) est en outre prévu pour supporter ledit élément de filtre (16) à l'intérieur dudit boîtier de filtration (12) adjacent à ladite plaque d'extrémité (20).

8. Dispositif de filtration de fluide (10) selon l'une quelconque des revendications précédentes, dans lequel ladite première partie déformable est en forme de soupape à obturateur déformable fendue comprenant deux côtés convergents planaires (68) dotés d'une fente à leur point de convergence.

9. Dispositif de filtration de fluide (10) selon l'une quelconque des revendications précédentes, dans lequel ledit élément de filtre (16) est poussé vers ladite plaque d'extrémité (20) par un élément de ressort (18) disposé entre une extrémité fermée dudit boîtier de filtration (12) et ledit élément de filtre (16) pour reposer contre ladite plaque d'extrémité (20).

10. Dispositif de filtration de fluide (10) selon l'une quelconque des revendications précédentes, dans lequel ladite partie de support (56) de ladite soupape de réglage (50) est intercalée entre ledit élément de filtre (16) et ladite plaque d'extrémité (20).

11. Dispositif de filtration de fluide (10) selon la revendication 10, dans lequel ledit corps de soupape monobloc (52) de ladite soupape de réglage (50) comprend en outre une pluralité de nervures (62) s'étendant vers l'extérieur depuis ladite partie de support (56) de façon à former au moins un passage de dérivation (66) entre ledit élément de filtre (16) et ledit corps de soupape monobloc (52), ledit passage de dérivation (66) procurant une communication fluidique directe entre lesdites chambres d'entrée et de sortie (42, 44) en contournant ledit élément de filtre (16).

12. Dispositif de filtration de fluide (10) selon la revendication 11, dans lequel ladite seconde partie déformable de façon résiliente (60) dudit corps de soupape monobloc (52) ferme normalement ledit au moins un passage de dérivation (66) pour empêcher la communication fluidique entre ladite chambre d'entrée (42) et ladite chambre de sortie (44) à travers ledit passage de dérivation (66).

13. Dispositif de filtration de fluide (10) selon la revendication 3, dans lequel l'un desdits bouchons d'extrémité (38a, 38b) comprend un flasque intérieur (39) formant une ouverture centrale (54) à travers celui-ci, et dans lequel ladite partie de rabat résiliente (60) de ladite soupape monobloc de réglage (50) coopère normalement de façon étanche avec ledit flasque intérieur (39) pour fermer ledit passage de dérivation (66).

14. Dispositif de filtration de fluide (10) selon la revendication 13, dans lequel ledit corps de soupape monobloc (52) comprend en outre une partie de collier (58) s'étendant axialement depuis ladite partie de rabat résiliente (60), et dans lequel ladite partie de collier (58) est disposée à l'intérieur de ladite ouverture centrale (54) à travers l'un desdits bouchons d'extrémité (38a, 38b) ; ledit au moins un passage de dérivation (66) étant prévu dans un espace entre ladite partie de collier (59) et ledit flasque intérieur (39) de l'un desdits bouchons d'extrémité (38a, 38b).

15. Soupape monobloc de réglage (50) pour un dispositif de filtration de fluide (10) comprenant un boîtier de filtration (12), une plaque d'extrémité (20) fermant ledit boîtier de filtration (12) et un élément de filtre (16) disposé à l'intérieur dudit boîtier de filtration (12), ladite plaque d'extrémité (20) comportant une ouverture de sortie centrale (25) à travers celle-ci et au moins une ouverture d'entrée (23) espacée radialement de ladite ouverture de sortie centrale, ledit élément de filtre (16) divisant ledit boîtier (12) en une chambre d'entrée (42) en communication avec ladite au moins une ouverture d'entrée (23) et une chambre de sortie (44) en communication avec ladite sortie centrale, ledit dispositif de filtration de fluide (10) comprenant en outre au moins un passage de dérivation (66) raccordant de façon fluidique ladite chambre d'entrée (42) à ladite chambre de sortie (44), ladite soupape de réglage (50) comprenant un corps de soupape monobloc (52) constitué d'un matériau sensiblement résilient et comprenant une partie de support (56) comportant une ouverture centrale (54) à travers celle-ci, une première partie déformable de façon résiliente (68, 69) fermant normalement ladite ouverture centrale (54) et définissant un clapet antiretour (64) avec celle-ci, et une seconde partie déformable de façon résiliente (60) conçue pour fermer normalement ledit au moins un passage de dérivation (66) pour empêcher la communication fluidique entre ladite chambre d'entrée (42) et ladite chambre de sortie (44) à travers ledit au moins un passage de dérivation (66) et ouvrir ledit au moins un passage de dérivation (66) quand ledit élément de filtre (16) est obstrué, de telle sorte que le fluide puisse s'écouler de ladite chambre d'entrée (42) à ladite chambre de sortie (44).

16. Soupape monobloc de réglage (50) selon la revendication 15, dans lequel ladite seconde partie déformable de façon résiliente (60) comprend une partie de rabat résiliente (60) s'étendant radialement vers l'extérieur depuis ledit corps de soupape (52).

17. Soupape monobloc de réglage (50) selon la revendication 15 ou 16, dans laquelle ledit corps de soupape monobloc (52) comprend une pluralité de nervures (62) s'étendant vers l'extérieur depuis ladite partie de support (56) et définissant ledit au moins un passage de dérivation (66).

18. Soupape monobloc de réglage (50) selon la revendication 17, dans laquelle ladite partie de rabat (60) dudit corps de soupape monobloc (52) ferme normalement ledit au moins un passage de dérivation (66).

19. Soupape monobloc de réglage (50) selon la revendication 18, dans laquelle ledit corps de soupape monobloc (52) comprend en outre une partie de collier (58) s'étendant axialement depuis ladite partie de rabat résiliente (60).
